# EUROPEAN PATENT APPLICATION

(11) **EP 3 334 016 A2**
(43) Date of publication of application: **13.06.2018**
(21) Application number: 17204869.6
(22) Date of filing: 01.12.2017
(51) Int. Cl.: H02K 13/04

(54) **IMPROVED COMMUTATOR, ALUMINUM WINDING ROTOR COMPRISING SAID IMPROVED COMMUTATOR AND UNIVERSAL MOTOR COMPRISING SAID ALUMINUM WINDING MOTOR**

(30) Priority: 08.12.2016 SK 501272016 U
(71) Applicant: Askoll Holding S.r.l. a socio unico, 36031 Povolaro di Dueville (VI) (IT)
(72) Inventor: MARIONI, Elio, 36031 Dueville (Vicenza) (IT)
(74) Representative: Antonucci, Emanuele

(57) **Abstract**

Commutator (10) for a rotor (2) of a universal motor (1), particularly suitable for rotors having aluminum windings, comprising: a rotating support (11) and a plurality of commutator bars (12) made of a conductive material, which are mutually isolated and arranged about an outer periphery of said rotating support (11); each of said commutator bars (12) comprising: a main body (13) defining an outer surface (14) arranged to provide a temporary electric contact provided with a brush of said universal motor (1); and a hook-shaped flexible appendix (15), foldable above an attachment portion (14a) of the contact surface (14) to constrain a free end of a winding wire of said rotor (2) in electric connection with said commutator bar (12), advantageously recessed to facilitate the housing, thus avoiding wire damage.

## Description

### Field of application

The present invention refers to a commutator, specifically arranged for a rotor having aluminum windings of a universal motor. The invention also refers to said rotor having aluminum windings and the relative universal motor.

Said universal motor finds its main application as an internal component of household appliances, such as for instance washing machines or dishwashers.

### Prior art

The so-called universal motors are electric motors provided with rotor and stator windings energized in series, whose peculiar feature is that they can be powered both by direct and alternating current.

The universal motors, even when powered by alternating current, keep the high starting torque and compact size typical of the direct current motors, and therefore they are traditionally employed in various appliance applications.

The cost competition in the field has recently promoted the replacement of copper, which is traditionally used for the windings of the machine, with less valuable metals such as, for instance, aluminum.

The universal motors with aluminum wire winding, being it full aluminum or with a copper cladding (CCA), though substantially meeting the needs of the field, have some drawbacks which have not been solved so far, in particular relating to the connection of the wire with the commutator.

A first drawback relates to the relative fragility of aluminum compared to copper. The commutators used in the universal motors usually have a hook, made of a commutator bar's end portion folded on itself, which is adapted to block the free end of the winding wire to define the electric connection. In the presence of full aluminum or CCA wires, the closure of the hook often causes the incision and/or local breakage of the wire, so that production discards considerably and uneconomically increase.

A second drawback mainly occurs in the case of simple aluminum wires, wherein the interface between the hooks of the commutator, usually made of aluminum, and the end of the wire determines a galvanic couple with the consequent proneness to corrosion at the attachment point.

Therefore, the technical problem underlying the present invention is to conceive a commutator which at least partially solves the above drawbacks with respect to the prior art and which, in particular, allows countering the breakage and corrosion episodes of the aluminum winding wires.

### Summary of the invention

The previously identified technical problem is solved by a commutator for a rotor of a universal motor according to claim 1.

Other particularly advantageous features of the commutator are identified by the dependent claims 2 and 3.

The above mentioned technical problem is also solved by a rotor for a universal motor comprising a commutator of the above type according to independent claim 4, as well as a universal motor comprising said rotor according to independent claim 10.

Other particularly advantageous features of the rotor are identified in the appended dependent claims 5-9.

Further features and advantages will become more apparent from the following detailed description of a preferred, but not exclusive, embodiment of the present invention, with reference to the enclosed figures given by way of example and not for limiting purposes.

### Brief description of the drawings

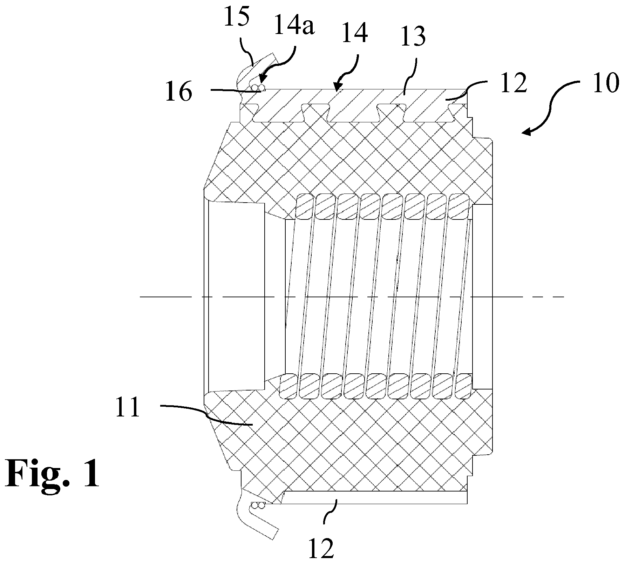

Figure 1 shows an axial section view of a commutator according to the present invention;
figure 2 shows a view of a detail of the device of figure 1, in a preliminary assembly step with the winding wire in a position below the connection hook not yet clamped;
figure 2A shows the detail of figure 2, in a final assembly step with the connection hook clamped on the winding wire;
figure 3 shows a view of a detail of a commutator according to the prior art, in a preliminary assembly step with the winding wire in a position below the connection hook not yet clamped;
figure 3A shows the detail of figure 3, in a final assembly step with the connection hook clamped on the winding wire;
figure 4 shows a perspective view of a whole of the universal motor according to the present invention, partially sectioned to show the internal commutator;

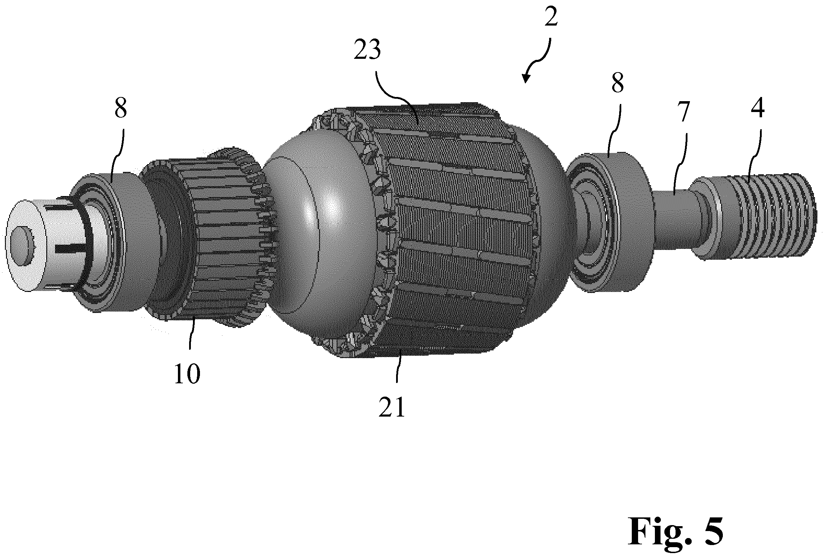

figure 5 shows a perspective view of a rotor for a universal motor according to the present invention;
figures 6A-6D schematically show as many steps of the winding process of a rotor for a universal motor according to the present invention;

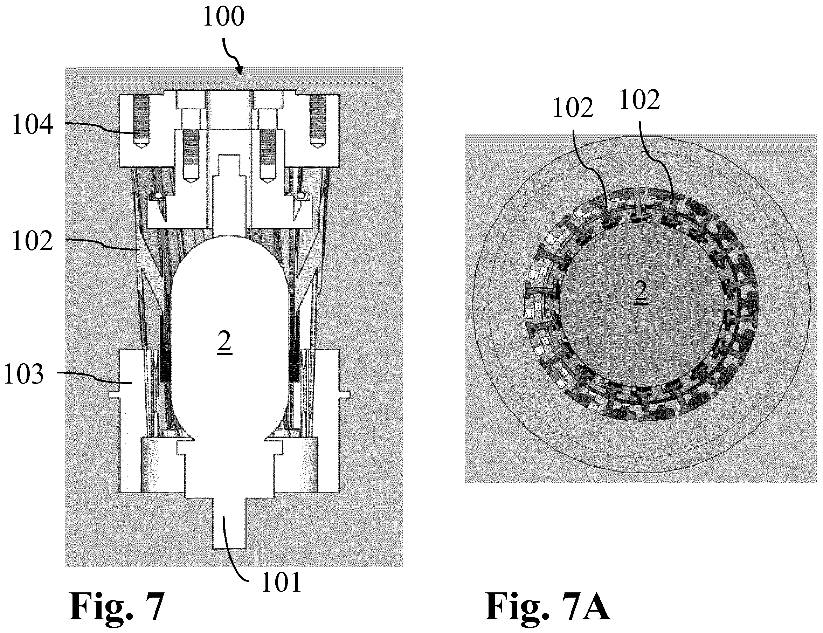

figure 7 shows an axial section view of a rotor for a universal motor according to the present invention associated with a winding machine, during a step of the winding process;
figure 7A shows a transverse section view of the rotor associated with the winding machine during the step of figure 7;

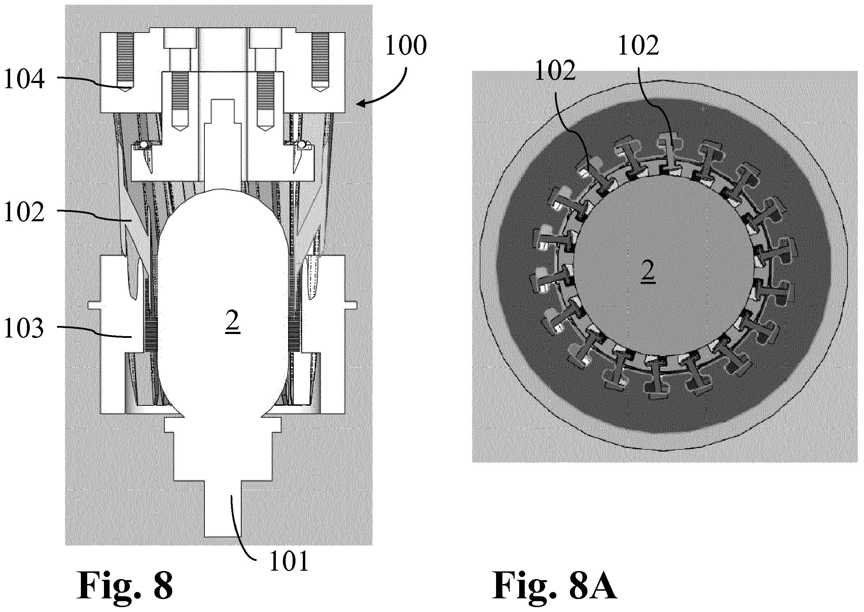

figure 8 shows an axial section view of a rotor for a universal motor according to the present invention associated with a winding machine, during a step of the winding process following the one of figure 7;
figure 8A shows a transverse section view of the rotor associated with the winding machine during the step of figure 8.

### Detailed description

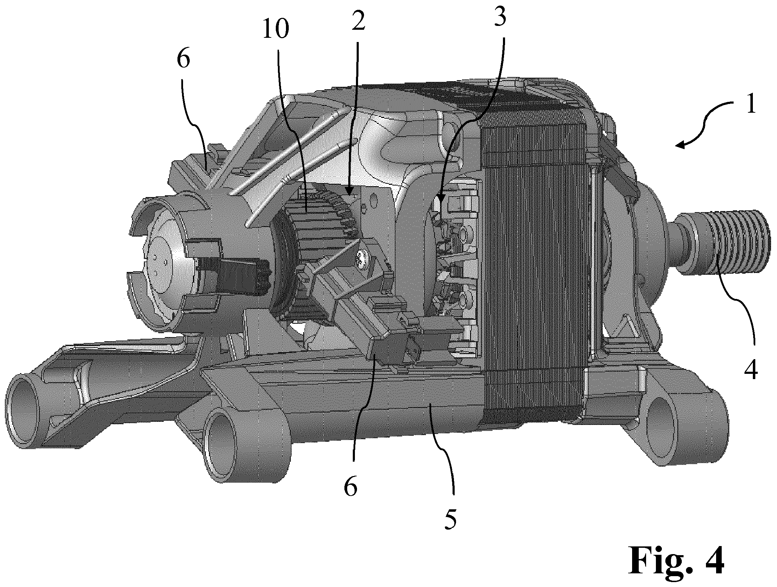

With reference to the enclosed figure 4, reference number 1 generically indicates a universal motor according to the present invention.

In the preferred embodiment previously shown, said universal motor 1 is specifically arranged for use in appliance applications, in particular to actuate the rotating drum of a washing machine or a similar device.

The universal motor 1 comprises an outer frame 5, comprising a plurality of feet adapted to fix to the household appliance frame.

A stator 3 integral to said outer frame 5 is provided, said stator 3 being made of coils wound around the poles of a magnetic circuit. Said windings are preferably made of full aluminum wire or copper-clad aluminum wire (CCA).

A rotor 2 is rotatably mounted within said stator 3, said rotor 2 being supported by two bearings or bushings 8 at the opposite ends of the outer frame 5. One of the ends of the rotor 2, coming out of the outer frame 5, bears a pulley 4 for operating a motion driving belt to the drum of the washing machine.

The windings of the rotor 2 are made of aluminum wire, preferably full aluminum to allow reducing costs as much as possible, or alternatively copper-clad aluminum.

Two brushes 6 are fixed laterally to the outer frame 5, which are arranged to allow powering the rotor 2 by means of an electric contact sliding above a commutator 10.

The commutator 10 is keyed on a shaft 7 of the rotor 2 and comprises in particular a rotating support 11 preferably in dielectric, which supports a plurality of commutator bars 12 that are arranged side by side but disjoint and electrically separated from each other.

Said commutator bars 12, preferably made of copper, have a main body 13 that longitudinally develops in a direction parallel to the axis of the shaft 7. Said main body 13 is integrally associated with the rotating support 11 below by means of mortise joints. An outer surface 14 of said main body 13 provides the sliding electric contact with the brushes 6 during the operation of the universal motor 1.

The end of said commutator bars 12 facing the rotor winding has instead a hook-shaped flexible appendix 15, whose function is to block in position a free end of the winding wire 22 of the rotor 2 providing an electric connection therewith.

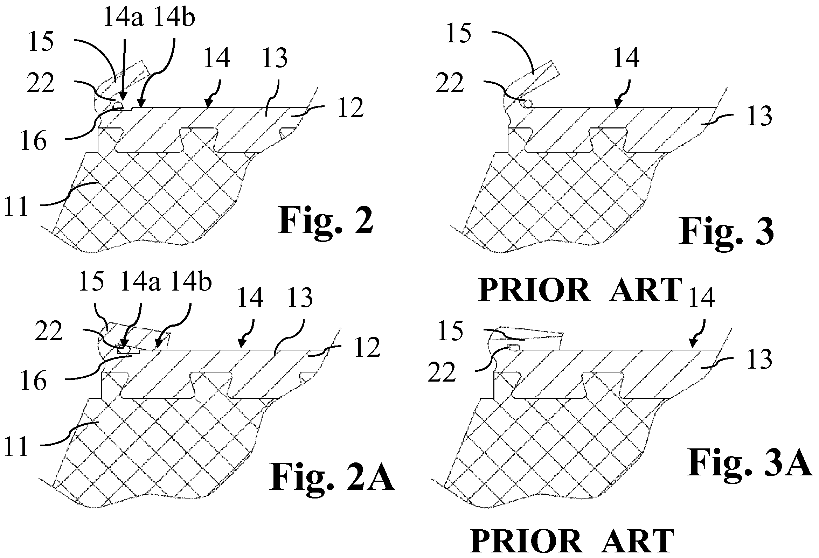

As visible in figures 2, 2A, said flexible appendix 15, made as an enbloc with the main body 13, i.e. also of copper, is elastically deformable between an initial open position, in which it is kept far from the outer surface 14, and a final closed position, in which it contacts the outer surface 14 blocking in position the winding wire. In the closed position, the free end 15a of said flexible appendix 15 rests against an outer surface 14 portion, identified in the following as an abutment portion 14b.

In particular, said wire 22 is positioned in a recessed seat 16 of the outer surface 14, identified in the following as attachment portion 14a of the outer surface 14. Said seat 16, which defines a significant depression with respect to the rest of the outer surface 14 otherwise flat, extends from the departing point of the flexible appendix 15 up to the abutment portion 14b, the latter being at the level of the rest of the outer surface 14. In other terms, the flexible appendix 15 closes as a bridge above the recessed seat 16 contacting a non-recessed outer surface 14 portion, i.e. continuous with respect to the rest of the surface.

As it is apparent by comparing figures 2, 2A with figures 3, 3A, the commutators according to the prior art do not have a recessed seat for the wire 22, namely their outer surface 14 extends planarly up to the development point of the flexible appendix 15. The flexible appendix 15 thus exerts a considerable pressure on the wire 22, transmitting a strong and localized stress that can result in the breakage of the wire 22 itself.

Instead, in the commutator according to the invention, the seat 16 allows a lesser strain of the wire 22, avoiding or anyway reducing the local incision of the wire 22 which is potentially critical.

It is should be in particular noted that the depth of the recess of the seat 16, preferably constant, is less than the diameter of the wire 22, so that the closure of the flexible appendix 15 anyway ensures a proper clamping of the wire 22, which is useful to ensure the electric connection and the stability of the mechanical connection between the elements.

The interface between the aluminum wire 22 and the copper commutator bar 12, at the flexible appendix 15, defines a galvanic couple which can cause corrosion phenomena over time, which result in the oxidation of the contacts and loss of electric continuity.

In order to avoid said corrosion phenomena, the rotor 2 provides a protective coating, in particular at the commutator 10 above the flexible appendices 15 which block the wires 22.

Said protective coating is preferably made through the following steps:
a pre-heating step at a temperature indicatively equal to 120°C;
a step of applying a gel coating above the commutator 10;
a step of applying a resin, preferably a polyester resin, on the rotor 2;
a step of rotating the spindle at a relatively low speed (indicatively 25 rev /min);
a final cooking step, for about 30', at a temperature indicatively equal to 140°.

The gel coating preferably comprises the product called Dolphon® CG-1062 marketed by Dolph's-Von Roll, possibly mixed with another product (for instance: HAE8471), with mixing ratio in weight 100:16. Other analogous products can obviously be alternatively used (for instance RSE 7649P with Re 2000, mixing ratio in weight 100:8).

Said polyester resin is preferably made of the product called Dolphon® XL-2110 marketed by Dolph's-Von Roll.

A further aspect of interest in the production of the rotor 2 according to the present invention relates to the winding of the wire 22 about a cylindrical rotor body 21, whereon a plurality of grooves 23 are provided for housing the winding wire 22.

The winding is carried out by means of a suitable operating machine 100. The machine comprises a spindle 101, which is preferably formed by a pneumatic gripper and which is provided with a translation axis and with a rotation axis; a plurality of rod-like guides 105, which are associated in the upper part with a base 104 and are arranged peripherally inclined to a cylindric central volume, and a compression bush 103 sliding along said guides 105 to follow a helical path. The compression bush 103, by approaching the opposite base 104 in its helical motion, slides on the inclined profile of a plurality of suitable punches 102 pressing them in an internal radial direction.

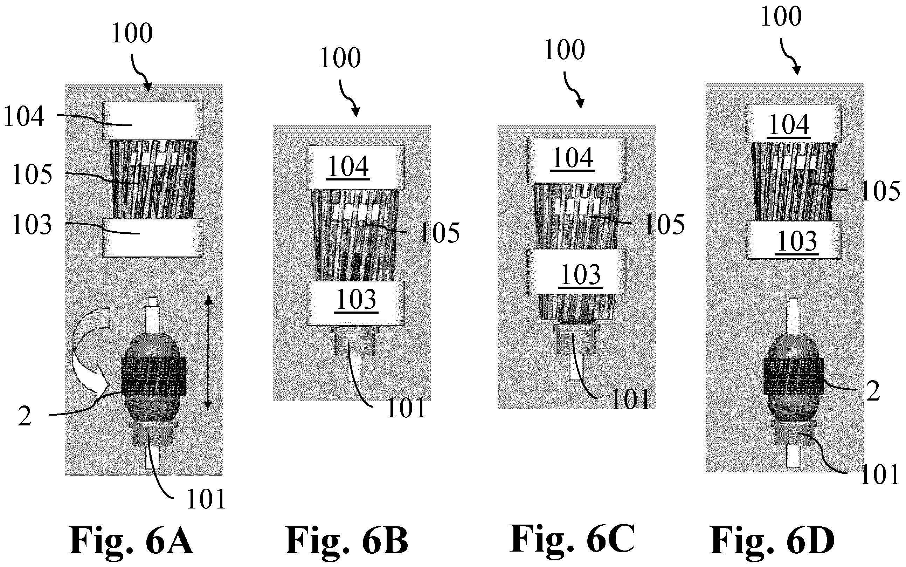

In order to follow the winding procedure, the rotor 2 is preliminarily mounted on the pneumatic gripper 100. Thus, it is simultaneously translated along its own axis and rotated about it, so as to enter the cylindrical volume defined by the guides 105 with the cylindric punches 102 that introduce into the above grooves 23 of the rotor body 21 (see fig. 6A).

At this point, the compression bush 103, moved along a vertical axis, lifts following the defined vertical path of the guides 105 sliding on the inclined profile of the punches 102 and pressing them on the wire 22 introduced into the grooves 23 of the stator body, so as to pack the coils of the rotor winding (see fig. 6B and fig. 6C).

In the end, after completion of the coils compression, the compression bush 103 returns to the rest lower position and the pneumatic gripper 100 is lowered to allow disassembling the rotor 2 (see fig. 6D).

Obviously, a skilled person can make several changes and variants to the above described invention, in order to meet contingent and specific needs, all of them by the way contained in the scope of protection of the invention as defined by the following claims.

## Claims

1. Commutator (10) for a rotor (2) of a universal motor (1), comprising: a rotating support (11) and a plurality of commutator bars (12) made of a conductive material, which are mutually isolated and arranged about an outer periphery of said rotating support (11); each of said commutator bars (12) comprising: a main body (13) defining an outer surface (14) arranged to provide a temporary electric contact with a brush of said universal motor (1); and a hook-shaped flexible appendix (15), foldable above an attachment portion (14a) of the contact surface (14) to constrain a free end of a winding wire (22) of said rotor (2) in electric connection with said commutator bar (12); **characterized in that** said attachment portion (14a) has at least one seat (16), which is recessed with respect to an adjacent portion of said contact surface (14).

2. Commutator (10) according to claim 1, wherein said adjacent portion is an abutment portion (14b), said flexible appendix (15) being foldable until it brings one of its free end (15a) in contact with said abutment portion (14b).

3. Commutator (10) according to claim 2, wherein said seat (16) is recessed with respect to the rest of the contact surface (14), otherwise flat.

4. Rotor (2) for a universal motor (1) comprising: a shaft (7); a commutator (10) according to one of the previous claims, whose rotating support (11) is fixedly constrained to said shaft (7); and a rotor winding which is also integral with said shaft (7); the wires (22) defining said rotor winding being at least internally made of aluminum, free ends of said wires (22) being constrained to the commutator bars (12) of said commutator (10) by means of said folded flexible appendixes (15).

5. Rotor (2) for a universal motor (1) according to claim 4, wherein the depth of said seat (16) with respect to the plane of the contact surface (14) is less than the diameter of the wire (22).

6. Rotor (2) for a universal motor (1) according to one of claims 4 or 5, further comprising a protective coating covering said flexible appendixes (15) where they are in contact with said free ends of the wires (22).

7. Rotor (2) for a universal motor (1) according to claim 6, wherein said protective coating comprises a first gel coating layer covered by a second polyester resin layer.

8. Rotor (2) according to claim 7, wherein said polyester resin is the product called Dolphon® XL-2110 marketed by Dolph's-Von Roll.

9. Rotor (2) according to one of claims 7 or 8, wherein said gel coating comprises the product called Dolphon® CG-1062 marketed by Dolph's-Von Roll.

10. Universal motor (1) comprising a rotor (2) according to one of claims 4-9, said rotor (2) being rotatably free within a stator body (3).
